(19) Europäisches Patentamt
European Patent Office
Office européen des brevets

(11) EP 2 607 402 A2

(12) # EUROPEAN PATENT APPLICATION

(43) Date of publication:
**26.06.2013 Bulletin 2013/26**

(21) Application number: **12198033.8**

(22) Date of filing: **19.12.2012**

(51) Int Cl.:
***C08G 69/26*** (2006.01)
***C08G 69/44*** (2006.01)
***C08G 69/48*** (2006.01)
***C08L 77/06*** (2006.01)
***C08L 77/12*** (2006.01)
***C08G 63/685*** (2006.01)
***C08G 63/91*** (2006.01)
***C08L 67/02*** (2006.01)

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **22.12.2011 KR 20110139975**

(71) Applicant: **Cheil Industries Inc.**
**Uiwang-si, Gyeonggi-do (KR)**

(72) Inventors:
- **Je, Jin A**
  **Uiwang-si, Gyeonggi-do (KR)**
- **Kwon, So Young**
  **Uiwang-si, Gyeonggi-do (KR)**
- **Kim, Jin Kyu**
  **Uiwang-si, Gyeonggi-do (KR)**
- **Im, Sang Kyun**
  **Uiwang-si, Gyeonggi-do (KR)**
- **Jang, Seung Hyun**
  **Uiwang-si, Gyeonggi-do (KR)**
- **Yang, Jin Haek**
  **Gumi-si, Gyeongsangbuk-do 730-710 (KR)**

(74) Representative: **Bublak, Wolfgang**
**Bardehle Pagenberg Partnerschaft**
**Patentanwälte, Rechtsanwälte**
**Prinzregentenplatz 7**
**81675 München (DE)**

(54) **Modified Polyamide Resin with Heat Resistance, Moldability and Whiteness and Method for Preparing the Same Using Polyester Resin**

(57) A modified polyamide resin includes repeating units derived from dicarboxylic acid; and repeating units derived from aliphatic saturated diamines in its chain. The repeating units derived from aliphatic saturated diamines includes repeating units derived from an aliphatic saturated C2 to C6 diamine and from an aliphatic saturated C6 to C12 diamine which is different from the aliphatic saturated C2 to C6 diamine.

EP 2 607 402 A2

**Description**

This invention relates to polyamide resin that can have excellent heat resistance, moldability and whiteness and to a method for preparing the same using polyester resin.

Polyethylene terephthalate (PET) and polybutylene terephthalate (PBT) are examples of well-known polyester resins. These polyester resins can be processed by various methods for use in a variety of fields, such as films, fibers, bottles, and packaging materials, and these products can be collected after their use and recycled.

One method for recycling these scrap polyester resins includes converting the polyester resin into high value added heat resistant polyamide resin. These recycled heat resistant polyamide resins can be used in the manufacture of various products requiring heat resistance, such as automobile parts, electric/electronic parts, and machine parts.

Examples of methods of converting recycled polyester resin into polyamide are discussed in US Patent No. 6,383,181, US Patent No.5,837,803, and Japanese Patent publication No. 3,664,577. Such methods of preparing polyamide resin include reacting linear polyester resin having an extreme viscosity of more than 0.2 dl/g with diamine compound to prepare polyamide resin, in which an ester group is wholly substituted with an amide group, or polyesteramide resin in which an ester group is partially substituted with an amide. In the preparation of the polyamide resin, inorganic salts are used as reaction catalysts, N-methylpyrrolidone, normal dodecylbenzene, orthodichlorobenzene, and sulforan are used as solvents, and hexamethylenediamine or paraphenylenediamine are used as diamine compounds. However, because these methods of preparing polyamide resins use a reaction solvent to generate an amidation reaction, there is a problem of solvent recovery after the reaction.

Korean Patent Application No. 2002-0070589 discusses a method of converting polyester resin into heat resistant polyamide resin including a batch reaction process in which polyester resin and diamine compounds are reacted in the presence of organic solvent and an esterification reaction catalyst, and a semi-batch reaction, in which the product formed during the batch reaction process is condensation polymerized while removing the glycol component. In this method, the glycol component is removed by flowing nitrogen gas through the reactor instead of using a vacuum. However, although the polyamide resin prepared by this method can have high heat resistance, moldability can be poor. As a result, applications for the polyamide resin can be limited.

It is the object of the present invention to provide a modified polyamide resin having excellent heat resistant properties, moldability, high viscosity and/or whiteness by reducing amine terminal groups. The modified polyamide resin further can have low moisture absorption. The modified polyamide resin includes repeating units derived from heterogeneous aliphatic saturated diamines. It is a further object to provide a method of making a modified polyamide resin using a polyester resin.

Above objects have been achieved by a modified polyamide resin that includes repeating units in its chain derived from dicarboxylic acid as indicated by the following Chemical Formula 1; and repeating units in its chain derive from an aliphatic saturated diamine as indicated by following Chemical Formula 2, wherein the repeating units in its chain derive from an aliphatic saturated diamine as indicated by following Chemical Formula 2 include repeating units in its chain derived from an aliphatic saturated C2 to C6 diamine as indicated by the following Chemical Formula 2, and repeating units in its chain derived from an aliphatic saturated C6 to C12 diamine which is different from the aliphatic saturated C2 to C6 diamine, as also indicated by the following Chemical Formula 2:

[Chemical Formula 1]

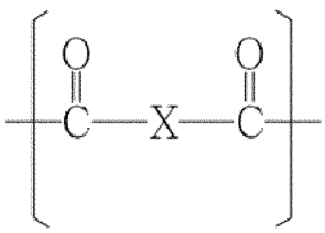

[Chemical Formula 2]

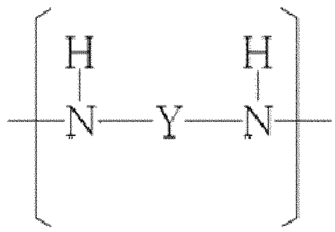

In the above Chemical Formula 1, X is a part of a repeating unit derived from the dicarboxylic acid and corresponds to an aliphatic saturated hydrocarbon group and/or an aromatic hydrocarbon group of the dicarboxylic acid.

In the above Chemical Formula 2, Y can be a part of a repeating unit derived from the aliphatic saturated C2 to C6 diamine and can correspond to a C2 to C6 aliphatic saturated hydrocarbon group of the aliphatic saturated C2 to C6 diamine. In other repeating units also represented by the above Chemical Formula 2, Y can be a part of a repeating unit derived from the aliphatic saturated C6 to C12 diamine and can correspond to a C6 to C12 aliphatic saturated hydrocarbon group of the aliphatic saturated C6 to C12 diamine. Accordingly, the skilled artisan will appreciate that the modified polyamide resin of the invention will include repeating units derived from the aliphatic saturated C2 to C6

diamine, as represented by Chemical Formula 2, and will also include different repeating units derived from the aliphatic saturated C6 to C12 diamine which is different from the aliphatic saturated C2 to C6 diamine, also as indicated by Chemical Formula 2.

The modified polyamide resin can include repeating units derived from the dicarboxylic acid as indicated in the above Chemical Formula 1 in an amount of 30 to 70 mole% and further can include repeating units derived from the aliphatic saturated diamines as indicated in the above Chemical Formula 2 in an amount of 30 to 70 mole%.

In exemplary embodiments, the repeating units derived from the aliphatic saturated diamines can include 5 to 95 mole% of repeating units derived from the aliphatic saturated C2 to C6 diamine and 5 to 95 mole% of repeating units derived from the aliphatic saturated C6 to C12 diamine that is different from the aliphatic saturated C2 to C6 diamine.

In exemplary embodiments, the repeating unit derived from dicarboxylic acid can include 1 to 20 mole% of repeating units derived from the aliphatic saturated dicarboxylic acid and 80 to 99 mole% of repeating units derived from the aromatic dicarboxylic acid.

Examples of the aliphatic saturated dicarboxylic acid can include without limitation oxalic acid, malonic acid, succinic acid, glutaric acid, adipic acid, pimelic acid, suberic acid, azelaic acid, sebacic acid, undecanedioic acid, dodecanedioic acid, and the like, and combinations thereof.

Examples of the aromatic dicarboxylic acid can include without limitation orthophthalic acid, isophthalic acid, terephthalic acid, and like, and combinations thereof.

Examples of the aliphatic saturated C2 to C6 diamine can include without limitation 1,2-ethanediamine, 1,3-propanediamine 1,4-butanediamine, 1,5-pentanediamine, 1,6-hexanediamine, 2-methylpentanediamine, 3-methyl-1,5-pentanediamine, and like, and combinations thereof.

Examples of the aliphatic saturated C6 to C12 diamine can include without limitation 1,6-hexanediamine, 1,7-heptanediamine, 1,8-octanediamine, 1,9-nonanediamine, 1,10-decanediamine, 1,11-undecanediamine, 1,12-dodecanediamine, 3-methyl-1,5-pentanediamine, 2-butyl-2-ethyl-1,5-pentanediamine, 2,4,4-trimethyl-1,6-hexanediamine, 5-methyl-1,9-nonanediamine, and the like, and combinations thereof.

The aliphatic saturated C2 to C6 diamine and/or aliphatic saturated C6 to C12 diamine can be substituted with a diamine ether. Examples of the diamine ether include without limitation 2,2-oxybis(ethylamine), bis(3-aminopropyl) ether, ethylene glycol bis(3-aminopropyl)ether, 1,7-diamino-3,5-dioxoheptane, 1,10-diamino-4,7-dioxoundecane, 1,10-diamino-4,7-dioxo-5-methyldecane and the like, and combinations thereof.

The modified polyamide resin can further include a repeating unit represented by the following Chemical Formula 3 derived from a diol in an amount of 0 to 5 mole %, based on 100 mole % of the repeating unit derived from the dicarboxylic acid and repeating unit derived from the aliphatic saturated diamines:

[Chemical Formula 3]

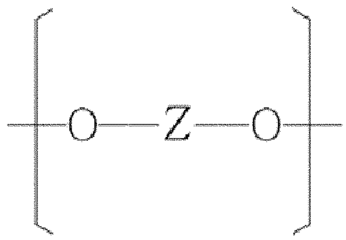

In the above Chemical Formula 3, Z is a part of a repeating unit derived from the diol and corresponds to an aliphatic saturated hydrocarbon group and/ or aromatic hydrocarbon group of the diol.

In exemplary embodiments, the modified polyamide resin can have an intrinsic viscosity of 0.60 to 1.00 dL/g.

In exemplary embodiments, the modified polyamide may have amine terminal groups in an amount of 30 to 1,000 μeq/g.

In exemplary embodiments, the modified polyamide may have a thermal decomposition temperature of 415 to 445°C, a melting temperature of 310 to 340°C, a crystallization temperature of 270 to 300°C, and a glass transition temperature of 140 to 170 °C.

In exemplary embodiments, the modified polyamide may have a moisture absorption rate of 1.0 to 4.5% after being maintained inside a thermo-hygrostat chamber at a temperature 80°C and a relative humidity of 90% for 48 hours and a L* value of 80 to 100 measured in accordance with ASTM D1209 using a color difference meter.

The method of making a modified polyamide resin using polyester resin can include solid phase amidation of a mixture of polyester resin, aliphatic saturated C2 to C6 diamine monomer, and aliphatic saturated C6 to C12 diamine monomer which is different from the aliphatic saturated C2 to C6 diamine monomer in the presence of an amidation catalyst to produce a modified polyamide prepolymer; removing a diol component that is derived from the polyester resin

under vacuum conditions; adding dicarboxlyic acid to the formed modified polyamide prepolymer; and solid phase polymerization of the modified polyamide prepolymer to produce the modified polyamide resin.

In exemplary embodiments, the modified polyamide prepolymer can be formed at a temperature of 120 to 220 °C for 4 to 7 hours. In exemplary embodiments, the diol can be removed at a temperature of 150 to 200 °C and a pressure of about 10 mbar for 3 to 22 hours. In exemplary embodiments, solid phase polymerization of the modified polyamide prepolymer to produce the modified polyamide resin can be conducted at a temperature of 200 to 300 °C for 6 to 10 hours.

In exemplary embodiments, the polyester resin can be used in an amount of about 100 parts by weight, the aliphatic saturated C2 to C6 diamine monomer can be used in an amount of 10 to 60 parts by weight based on 100 parts by weight polyester resin, the aliphatic saturated C6 to C12 diamine monomer can be used in an amount of 10 to 60 parts by weight based on 100 parts by weight polyester resin, the amidation catalyst can be used in an amount of 0.01 to 3 parts by weight based on 100 parts by weight polyester resin. In exemplary embodiments of the invention, the dicarboxylic acid can be used in an amount of 1 to 25 parts by weight, based on 100 parts by weight of the modified polyamide prepolymer.

Examples of the aliphatic saturated C2 to C 6 diamine monomer can include without limitation 1,2-ethanediamine, 1,3-propanediamine, 1,4-butanediamine, 1,5-pentanediamine, 1,6-hexanediamine, 2-methylpentanediamine 3-methyl-1,5-pentanediamine, and the like, and combinations thereof.

Examples of the aliphatic saturated C6 to C12 diamine monomer can include without limitation 1,6-hexanediamine, 1,7-heptanediamine, 1,8-octanediamine, 1,9-nonanediamine, 1,10-decanediamine, 1,11-undecanediamine, 1,12-dodecanediamine, 3-methyl-1,5-pentanediamine, 2-butyle-2-ethyl-1,5-pentanediamine, 2,4,4-trimethyl-1,6-hexanediamine, 5-methyl-1,9-nonanediame, and the like, and combinations thereof.

In exemplary embodiments, the aliphatic saturated C2 to C6 diamine monomer and/or the aliphatic saturated C6 to C12 diamine monomer can be substituted with diamine ether. Examples of the diamine ether can include without limitation 2,2-oxybis(ethylamine), bis(3-aminopropyl)ether, ethylene glycol bis(3-aminopropyl)ether, 1,7-diamino-35-dioxoheptane, 1,10-diamino-4,7-dioxoundecane, 1,10-diamino-4,7-dioxo-5-methyldecane, and the like, and combinations thereof.

Examples of the amidation catalyst can include without limitation phosphoric acid, phosphorus acid, hypophosphorus acid, sodium hypophosphate, and the like, and combinations thereof.

Examples of the dicarboxylic acid can include without limitation oxalic acid, malonic acid, succinic acid, glutaric acid, adipic acid, pimelic acid, suberic acid, azelaic acid, sebacic acid, undecanedioic acid, dodecanedioic acid, orthophthalic acid, isophthalic acid, terephthalic acid, and the like, and combinations thereof.

The present invention will be described more fully hereinafter in the following detailed description of the invention, in which some but not all embodiments of the invention are described. Indeed, this invention may be embodied in many different forms and should not be construed as limited to the embodiments set forth herein; rather, these embodiments are provided so that this disclosure will satisfy applicable legal requirements.

<u>Modified polyamide resin</u>

The modified polyamide resin includes repeating units in its chain derived from a dicarboxylic acid as indicated in the following Chemical Formula 1; and repeating units in its chain derive from an aliphatic saturated diamine as indicated by following Chemical Formula 2, wherein the repeating units in its chain derive from an aliphatic saturated diamine as indicated by following Chemical Formula 2 include repeating units in its chain derived from an aliphatic saturated C2 to C6 diamine as indicated by the following Chemical Formula 2, and repeating units in its chain derived from an aliphatic saturated C6 to C12 diamine which is different from the aliphatic saturated C2 to C6 diamine, as also indicated by the following Chemical Formula 2:

[Chemical Formula 1]

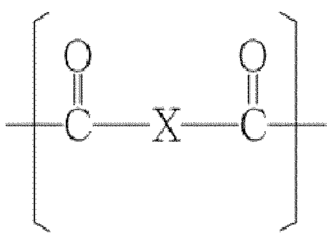

[Chemical Formula 2]

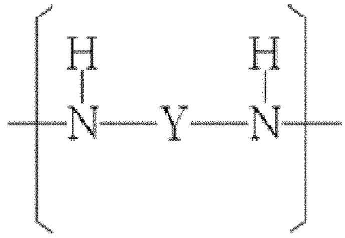

In the above Chemical Formula 1, X is a part of a repeating unit derived from the dicarboxylic acid and corresponds to an aliphatic saturated hydrocarbon group and/or an aromatic hydrocarbon group of the dicarboxylic acid.

As used herein, reference to a repeating unit derived from a dicarboxylic acid refers to a residual group of a dicarboxylic acid from which hydroxyl groups are removed from both the terminal ends thereof.

As used herein, the aliphatic saturated hydrocarbon group of X can be a C2 to C20 aliphatic unsaturated hydrocarbon group. The aliphatic saturated hydrocarbon groups of X can be substituted or unsubstituted and can be linear, branched, or cyclic aliphatic saturated hydrocarbons. Examples of the linear aliphatic saturated hydrocarbons include without limitation methane, ethane, propane, butane, pentane, hexane, heptane, octane, nonane, decane, undecane, and dodecane, and the like, and combinations thereof. Examples of the branched aliphatic saturated hydrocarbons include without limitation isopropane, isobutene, isopentane, isohexane, isoheptane, isooctane, isononane, isodecane, isoundecane, isdodecane, and the like, and combinations thereof. Examples of the cyclic aliphatic saturated hydrocarbon include without limitation cyclopropane, cyclobutane, cyclopentane, cyclohexane, cycloheptane, cyclooctane, cyclodecane, cycloundecane, cyclododecane, and the like, and combinations thereof.

As used herein, when a specific definition is not otherwise provided, the term "substituted" may refer to one substituted with halogen (F, Cl, Br, or I), hydroxyl, C1 to C20 alkoxy, a nitro group, a cyano group, an amino group, an imino group, an azido group, an amidino group, a hydrazino group, a hydrazono group, a carbonyl group, a carbamyl group, a thiol group, an ester group, an ether group, a carboxyl group or a salt thereof, a sulfonic acid group or a salt thereof, a phosphoric acid or a salt thereof, C1 to C20 alkyl, C2 to C20 alkenyl, C2 to C20 alkynyl, C6 to C30 aryl, a C3 to C20 cycloalkyl, C3 to C20 cycloalkenyl, C3 to C20 cycloalkynyl, C2 to C20 heterocycloalkyl, C2 to C20 heterocycloalkenyl, C2 to C20 heterocycloalkynyl, C3 to C30 heteroaryl, or a combination thereof, instead of at least one hydrogen.

As used herein, the aromatic hydrocarbon group of X can be a C6 to C30 aromatic hydrocarbon group. Examples of the aromatic hydrocarbon groups of X include without limitation benzene, toluene, ethylbenzene, xylene, mesitylene, durene, 2-phenylhexane, biphenyl, naphthalene and the like, and combinations thereof.

Examples of the aliphatic saturated dicarboxylic acid can include without limitation oxalic acid, malonic acid, succinic acid, glutaric acid, adipic acid, pimelic acid, suberic acid, azelaic acid, sebacic acid, undecanedioic acid, dodecanedioic acid, and the like, and combinations thereof. Examples of the aromatic dicarboxylic acid can include without limitation orthophthalic acid, isophthalic acid, terephthalic acid, and the like, and combinations thereof.

In exemplary embodiments, the repeating unit derived from a dicarboxylic acid can include 1 to 20 mole% of a repeating unit derived from an aliphatic saturated dicarboxylic acid and 80 to 99 mole % of a repeating unit derived from an aromatic dicarboxylic acid.

In the above Chemical Formula 2, Y can be a part of a repeating unit derived from the aliphatic saturated C2 to C6 diamine and can correspond to an aliphatic saturated C2 to C6 hydrocarbon group of the aliphatic saturated C2 to C6 diamine. In other repeating units also represented by the above Chemical Formula 2, Y can be a part of a repeating unit derived from the aliphatic saturated C6 to C12 diamine which is different from the aliphatic saturated C2 to C6 diamine and can correspond to an aliphatic saturated C6 to C12 hydrocarbon group of the aliphatic saturated C6 to C12 diamine.

Accordingly, the skilled artisan will appreciate that the modified polyamide resin of the invention will include repeating units derived from the aliphatic saturated C2 to C6 diamine, as represented by Chemical Formula 2, and will also include different repeating units derived from the aliphatic saturated C6 to C12 diamine which is different from the aliphatic saturated C2 to C6 diamine, also as indicated by Chemical Formula 2.

As used herein, reference to a repeating unit derived from an aliphatic saturated diamine refers to a residual group of an aliphatic saturated diamine from which hydrogen atoms are removed from both terminals ends thereof.

Examples of the aliphatic saturated C2 to C6 hydrocarbon group of the aliphatic saturated C2 to C6 diamine and examples of the aliphatic saturated C6 to C12 hydrocarbon group of the aliphatic saturated C6 to C12 diamine can include without limitation ethane, propane, butane, pentane, hexane, 2-methylpentane,3-methylpentane, heptane, octane, nonane, decane, undecane, dodecane, 2-butyl-2-ethyl-pentane, 2,4,4-trimethylhexane, 5-methylnonene, and the like, and combinations thereof.

Examples of the aliphatic saturated C2 to C6 diamine can include without limitation 1,2-ethanediamine, 1,3-propanediamine 1,4-butanediamine, 1,5-pentanediamine, 1,6-hexanediamine, 2-methylpentanediamine, 3-methyl-1,5-pentanediamine, and the like, and combinations thereof.

Examples of the aliphatic saturated C6 to C12 diamine can include without limitation 1,6-hexanediamine, 1,7-heptanediamine, 1,8-octanediamine, 1,9-nonanediamine, 1,10-decanediamine, 1,11-undecanediamine, 1,12-dodecanediamine, 3-methyl-1,5-pentanediamine, 2-butyl-2-ethyl-1,5-pentanediamine, 2,4,4-trimethyl-1,6-hexanediamine, 5-methyl-1,9-nonanediamine, and the like, and combinations thereof.

In exemplary embodiments, the aliphatic saturated C2 to C6 diamine and/or the aliphatic saturated C6 to C12 diamine can be substituted with diamine ether. Examples of the diamine ether can include without limitation 2,2-oxybis (ethylamine), bis(3-aminopropyl)ether, ethylene glycol bis(3-aminopropyl)ether, 1,7-diamino-3,5-dioxoheptane, 1,10-diamino-4,7-dioxoundecane, 1,10-diamino-4,7-dioxo-5-methyldecane, and the like, and combinations thereof.

The repeating unit derived from a dicarboxylic acid and the repeating unit derived from the aliphatic saturated diamines are covalently bonded each other to form an amide group.

When the terminal ends of the modified polyamide resin include a repeating unit derived from the dicarboxylic acid, the hydroxyl group is bonded at the terminal ends of the repeating unit derived from the dicarboxylic acid. When the terminal ends of the modified polyamide resin include a repeating unit derived from the aliphatic saturated diamines, the hydrogen atom is bonded at the terminal ends of the repeating unit derived from the aliphatic unsaturated diamines.

In exemplary embodiments, the aliphatic saturated C2 to C6 hydrocarbon and/or the aliphatic saturated C6 to C12 hydrocarbon can be substituted with ether. Examples of the ether include without limitation diethyl ether, dipropyl ether, ethylene glycol dipropyl ether, ethylene glycol ethylpropyl ether, propylene glycol butylpropyl ether, 1-methylpropylglycol butylpropyl ether, and the like, and combinations thereof.

In exemplary embodiments, the modified polyamide resin can include 30 to 70 mole% of repeating units as indicated in the above Chemical Formula 1 derived from a dicarboxylic acid and further can include 30 to 70 mole% of repeating units derived from the aliphatic saturated diamines as indicated in the above Chemical Formula 2.

In exemplary embodiments, the repeating units derived from the aliphatic saturated diamines can include 5 to 95 mole% of an aliphatic saturated C2 to C6 diamine and further can include 5 to 95 mole% of an aliphatic saturated C6 to C12 diamine which is different from the repeating unit derived from an aliphatic saturated C2 to C6 diamine.

In exemplary embodiments, the modified polyamide resin can further include a repeating unit indicated by the following Chemical Formula 3 derived from a diol. The repeating unit represented by Chemical Formula 3 can be present in an amount of 0 to 5 mole% based on 100 mole% of a repeating unit derived from the dicarboxylic acid and derived from the aliphatic saturated diamines:

[Chemical Formula 3]

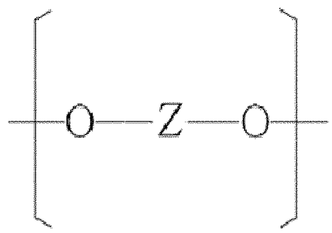

In the above Chemical Formula, Z is a part of a repeating unit derived from the diol and corresponds to an aliphatic saturated C2 to C20 hydrocarbon group and/or a C6 to C30 aromatic hydrocarbon group of the diol. Examples of the aliphatic saturated hydrocarbon and aromatic hydrocarbon are the same as set forth above.

As used herein, reference to a unit derived from the diol refers to a residual group of the diol from which the hydrogen atoms are removed from both the terminals ends thereof. The repeating unit derived from the diol and the repeating unit derived from the dicarboxylic acid can be covalently bonded with each other to form an ester group.

When the terminal ends of the modified polyamide resin includes a repeating unit derived from the diol, hydrogen is bonded at the terminal ends of the repeating unit derived from the diol.

The diol can be a C2 to C20 aliphatic saturated diol, C6 to C30 aromatic diol, or a combination thereof. Examples of the aliphatic saturated diol can include without limitation ethylene glycol, 1,3-propanediol, 1,4-butanediol, 1,5-pentanediol, 1,8-octanediol, 1,2-propanediol, 1,2-butanediol, 2,3-butanediol, 1,3-butanediol, 1,2-pentanediol, ethohexadiol, p-menthane-3,8-diol, 2-methyl-2,4-pentanediol, cyclobutanediol, cycloentanediol, cyclohexanediol, and the like, and combinations thereof. Examples of the aromatic diol include without limitation hydroquinone, lesosinol, bisphenol-A, and the like, and combinations thereof.

In exemplary embodiments, the modified polyamide resin can include 0 to 5 mole%, for example 0 to 1 mole%, and as another example 0 to 0.1 mole%, of the repeating unit represented by Chemical Formula 3 derived from a diol, based on 100 mole% of the repeating unit derived from the dicarboxylic acid and repeating unit derived from the aliphatic saturated diamines.

In exemplary embodiments, the modified polyamide resin can have an intrinsic viscosity of 0.60 to 1.00 dL/g.

In exemplary embodiments, the modified polyamide resin can have amine terminal groups in an amount of 30 to 1,000 $\mu$eq/g.

In exemplary embodiments, the modified polyamide resin can have a thermal decomposition of 415 to 445°C, a melting temperature of 310 to 340°C, a crystallization temperature of 270 to 300°C, and a glass transition temperature of 140 to 170 °C.

In exemplary embodiments, the modified polyamide can have a moisture absorption rate 1.0 to 4.5% after being maintained inside a thermo-hygrostat chamber at a temperature of 80°C and a relative humidity of 90% for 48 hours.

In exemplary embodiments, the modified polyamide can have a value L* of 80 to 100 measured using a color difference meter in accordance with ASTM D1209.

The invention further provides a composition including the modified polyamide resin and one or more additives.

Examples of the additives can include without limitation flame retardants, auxiliary flame retardants, lubricants, plasticizers, heat stabilizers, anti-dripping agents, antioxidants, compatibilizers, light stabilizers, dyes, pigments, inorganic fillers, and the like, and combinations thereof. The composition can include the additive in an amount of 0 to 30 parts by weight, for example 0 to 15 parts by weight, based on 100 parts by weight of the polyamide resin.

Preparation method of a modified polyamide resin by using the polyester resin

A method of preparation of a modified polyamide resin using the polyester resin in accordance with the invention includes a solid phase amidation process of a mixture of polyester resin, aliphatic saturated C2 to C6 diamine monomer, and aliphatic saturated C6 to C12 diamine monomer which is different from the aliphatic saturated C2 to C6 diamine monomer using an amidation catalyst to produce a modified polyamide prepolymer; removing diol component that is derived from the polyester resin under hypobaric conditions; and adding a dicarboxylic acid to the formed modified polyamide prepolymer, and then proceeding to solid polymerization to produce a modified polyamide resin. According to the method of preparation of a modified polyamide resin using the polyester resin, a waste polyester resin can be recycled. Also in this process, a diol component that is derived from the polyester resin can be recovered and recycled.

In exemplary embodiments, the formation of the modified polyamide prepolymer can be conducted at a temperature of 120 to 220 °C for 4 to 7 hours, the process of removing the diol can be conducted at a temperature of 150 to 200 °C at a pressure of 10 mbar for 3 to 22 hours, and the modified resin formation process can be conducted at a temperature of 200 to 300 °C for 6 to 10 hours.

In exemplary embodiments, the polyester resin can be used in an amount of 100 parts by weight.

In exemplary embodiments, the aliphatic saturated C2 to C6 diamine monomer can be used in an amount of 10 to 60 parts by weight, based on 100 parts by weight of the modified polyamide prepolymer.

In exemplary embodiments, the aliphatic saturated C6 to C12 diamine monomer can be used in an amount of 10 to 60 parts by weight, based on 100 parts by weight of the modified polyamide prepolymer.

In exemplary embodiments of the invention, the dicarboxylic acid can be used in an amount of 1 to 25 parts by weight, for example 1 to 15 parts by weight, and as another example 1 to 10 parts by weight, based on 100 parts by weight of the modified polyamide prepolymer.

In exemplary embodiments, the amidation catalyst can be used in an amount of 0.01 to parts by weight. for example 0.01 to 1.0 parts by weight, and as another example 0.01 to 0.5 parts by weight, based on 100 parts by weight of the polyester resin.

Examples of the polyester resins can include without limitation aliphatic polyester resins, semi-aromatic polyester resins, aromatic polyester resins, and the like, and combinations thereof.

Examples of the aliphatic polyester resin can include without limitation polyglycolic acid, polylactic acid, polycaprolactone, polyethylene adipate, polyhydroyalkanoate, and the like, and combinations thereof.

Examples of the semi-aromatic polyester resin can include without limitation polyethylene terephthalate, polybutylene terephthalate, polyethylene naphthalate, and the like, and combinations thereof.

Examples of the aromatic polyester resin can include without limitation vectran and the like and combinations thereof.

In exemplary embodiments, examples of the aliphatic saturated C2 to C6 diamine monomer can include without limitation 1,2-ethanediamine, 1,3-propanediamine, 1,4-butanediamine, 1,5-pentanediamine, 1,6-hexanediamine, 2-methylpentanediamine 3-methyl-1,5-pentanediamine, and the like, and combinations thereof.

In exemplary embodiments, examples of the aliphatic saturated C6 to C12 diamine monomer can include without limitation 1,6-hexanediamine, 1,7-heptanediamine, 1,8-octanediamine, 1,9-nonanediamine, 1,10-decanediamine, 1,11-undecanediamine, 1,12-dodecanediamine, 3-methyl-1,5-pentanediamine, 2-butyle-2-ethyl-1,5-pentanediamine, 2,4,4-trimethyl-1,6-hexanediamine, 5-methyl-1,9-nonanediame, and the like, and combinations thereof.

In exemplary embodiments, the aliphatic saturated C2 to C6 diamine monomer and/or the aliphatic saturated C6 to C12 diamine monomer can be substituted with a diamine ether. Examples of the diamine ether can include without limitation 2,2-oxybis(ethylamine), bis(3-aminopropyl)ether, ethylene glycol bis(3-aminopropyl)ether, 1,7-diamino-35-dioxoheptane, 1,10-diamino-4,7-dioxoundecane, 1,10-diamino-4,7-dioxo-5-methyldecane, and the like, and combinations thereof.

Examples of the amidation catalyst can include without limitation phosphoric acid, phosphorus acid, hypophosphorus acid, sodium hypophosphate, and the like, and combinations thereof.

In exemplary embodiments, the dicarboxylic acid can be an aliphatic saturated dicarboxylic acid, aromatic dicarboxylic acid, or a combination thereof. Examples of the aliphatic saturated dicarboxylic acid can include without limitation malonic acid, succinic acid, glutaric acid, adipic acid, pimelic acid, suberic acid, azelaic acid, sebacic acid, undecanedioic acid, dodecanedioic acid the like, and combinations thereof. Examples of said aromatic dicarboxylic acid can include without limitation orthophthalic acid, isophthalic acid, and the like, and combinations thereof.

Formed product prepared from the modified polyamide resin

The modified polyamide resin can be prepared by mixing the components and optional additives followed by a melt extrusion process inside an extruder to form pellets or chips. There is no specific limitation with regard to processes used to make products using the modified polyamide resin. For example, the modified polyamide resin can be used to make molded products using extrusion molding, injection molding, vacuum molding, blowing molding, casting forming, and the like.

The molded product of the invention can have excellent heat resistance, moldability, and whiteness and can have a low moisture absorption rate. Accordingly the modified polyamide resin can be used in the manufacture of products that require these properties, for example, automobile parts, electrical/electronic parts, machine parts, and the like.

The following examples are only being used with purpose of exemplification of this invention, and are not intended for limiting the scope of protection of this invention.

**Examples 1-7 and Comparative Examples 1-4**

Components (except dicarboxylic acid) in the specified amounts (unit: wt.%) in the following Table 1 are placed inside an autoclave (reactor), nitrogen is passed therethrough, and then oxygen is removed from reactor by purging several times. After this, the reactor is sealed, stirred for 1 hour at a temperature of 140 °C. Then the temperature is increased to 160 °C for 30 minutes, and the reaction is carried out at this temperature for 1 hour. After this, the reactor temperature is increased to 180 °C for 30 minutes, followed by a vacuum while the temperature is increased to 200 °C. This temperature was maintained for 2 hours to prepare the modified polyamide prepolymer. This process is followed by the recovery of ethylene glycol that is derived from the polyester resin under vacuum under a vacuum condition of lower than 2 mbar. The dicarboxylic acid is added to the prepared modified polyamide prepolymer (amounts: modified polyamide prepolymer 100 wt.%, unit: wt%) and then a solid phase polymerization is carried out at a temperature of 250°C for 6 hours to form a modified polyamide resin.

The physical properties of the prepared modified polyamide resin are measured in accordance with the following methods and the results are presented in Table 1.

(1) Amidation: By using 1H-NMR (AVANCE, 500 MHz, Bruker), the areas of - NH-CH2 peak (3.7 ppm) derived from diamine and ethylene peaks (4.9 ppm) derived from PET are integrated and the obtained values are divided by the corresponding hydrogen number to estimate the ratio.

(2) Intrinsic viscosity: After dissolving the modified polyamide resin into concentrated sulfuric acid (98%), the intrinsic viscosity is measured using an Ubbelohde viscometer at a temperature of 25 °C.

(3) Contents of the amine terminal group and carboxylic terminal group: After completely dissolving the modified polyamide resin into hexafluoroisopropanol, the amounts are measured by using 0.1 N HCL with a potentiometer.

(4) Thermal decomposition temperature: Temperature at a weight loss of 5% is measured with a thermogravimetric analyzer (TA instruments) over a temperature range of 40 °C -700 °C by increasing the temperature by 20°C /min.

(5) Melting temperature, crystallization temperature, and glass transition temperature: These properties are measured for the modified polyamide resin obtained by solid phase polymerization in the example and the comparative example under the conditions of a nitrogen atmosphere, temperature range 30 °C to 350 °C, temperature increase speed of 10 °C /min, and cooling speed of 10 °C /min. using a differential scanning calorimeter (TA Instruments). At this time, the crystallization temperature is determined as the maximum heating peak during cooling, the melting temperature is determined as the maximum heat absorption peak during the temperature increase, and the glass transition temperature is determined as the measured temperature during the second temperature increasing time.

(6) Moisture absorption rate: a test specimen with a length of 100mm and a width of 3mm is prepared using the modified polyamide resin and dried. After weighing the dry weight ($W_0$) of specimen, it is left inside a thermo-hygrostatic chamber for 48 hours, in which a temperature of 80 °C and relative humidity of 90% is maintained, and then the weight ($W_1$) of the specimen is measured. The moisture absorption rate is calculated using the following equation.

$$\text{- Moisture absorption rate (\%)} = [(W_1-W_0)/W_0] \times 100$$

(7) Whiteness: L* value is measured by using a color difference meter (SpectroEye available from Gretagmaceth, Switzerland) in accordance with ASTM D1209.

[Table 1]

| | Example | | | | | | | Comparative Example | | | |
|---|---|---|---|---|---|---|---|---|---|---|---|
| | 1 | 2 | 3 | 4 | 5 | 6 | 7 | 1 | 2 | 3 | 4 |
| Polyethylene terephthalate (PET) | 100 | 100 | 100 | 100 | 100 | 100 | 100 | 100 | 100 | 100 | 100 |
| 1,2-ethane diamine | 9.5 | - | - | - | 10.1 | 9.8 | 9.1 | 35 | - | - | - |
| 1,4-butane diamine | - | 9.5 | - | - | - | - | - | 35 | - | - | 35 |
| 1,6-hexane diamine | 43.2 | 42.7 | 39.7 | 40.9 | 41.5 | 42.1 | 43.3 | - | 70 | - | - |
| 1,8-octane diamine | - | - | 11 | - | - | - | - | - | - | 35 | 35 |
| 1,10-decane diamine | - | - | - | 10.4 | - | - | - | - | - | 35 | - |
| Sodium hypophosphinate | 0.16 | 0.18 | 0.17 | 0.17 | 0.16 | 0.15 | 0.16 | 0.15 | 0.17 | 0.16 | 0.16 |
| Glutaric acid | 4 | - | - | - | - | - | - | 4 | 4 | 4 | - |
| Adipic acid | - | 2 | 4 | - | - | - | - | - | - | - | - |
| Azelaic acid | - | - | - | 4 | 8 | - | - | - | - | - | - |
| Sebacic acid | - | - | - | - | - | 4 | - | - | - | - | - |
| Terephthalic acid | - | - | - | - | - | - | 2 | - | - | - | - |
| Amidation (%) | 92.3 | 94.1 | 96.8 | 94.4 | 95.5 | 92.8 | 93.2 | 68.0 | 72.0 | 72.9 | 75.1 |
| Intrinsic viscosity (dL/g) | 0.70 | 0.79 | 0.82 | 0.79 | 0.87 | 0.75 | 0.71 | 0.28 | Fail | 0.51 | 0.48 |
| Amine terminal group (μeq/g) | 420 | 487 | 362 | 418 | 422 | 411 | 480 | 1465 | 1246 | 144 | 121 |
| Carboxylic acid terminal group (μeq/g) | 125 | 137 | 33 | 110 | 98 | 75 | 100 | 1025 | 1042 | 144 | 121 |
| Thermal decomposition temp. (°C) | 430 | 435 | 442 | 445 | 444 | 432 | 435 | 375 | 388 | 386 | 381 |
| Melting temp. (°C) | 315 | 301 | 300 | 318 | 310 | 305 | 303 | Fail | Fail | 324 | 308 |
| Crystallization temp. (°C) | 273 | 268 | 276 | 280 | 278 | 265 | 266 | Fail | Fail | 265 | 252 |
| Glass transition temp. (°C) | 149 | 149 | 149 | 148 | 145 | 151 | 153 | Fail | Fail | 120 | 135 |
| Moisture absorption rate (%) | 3.5 | 3.0 | 2.4 | 2.6 | 3.9 | 3.7 | 3.6 | 5.2 | 5.1 | 4.8 | 6.4 |
| Whiteness (L*) | 89 | 90 | 88 | 86 | 90 | 89 | 87 | 65 | 69 | 74 | 65 |

From the above Table 1, the modified polyamides of Examples 1-7 have a high amidation rate, intrinsic viscosity, thermal decomposition temperature, melting temperature, crystallization temperature, glass transition temperature, and whiteness. In contrast, the amine terminal group content, carboxylic terminal group content, and moisture absorption

rate are low. Although not wanting to be bound by any theory of explanation of the invention, it is currently believed this is because heterogeneous aliphatic saturated diamines, amidation catalyst, and dicarboxylic acid are used.

However, in contrast, in the Comparative Examples using only an aliphatic saturated C2 to C6 diamine, amidation rate, intrinsic viscosity, thermal decomposition temperature, and whiteness are low; the amine terminal group content, carboxylic terminal group content, and moisture absorption rate are high, and the melting temperature, crystallization temperature, and glass transition temperature are not found. Also, in Comparative Example 2, using only an aliphatic saturated C2 to C6 diamine a low amidation rate, thermal decomposition temperature, and whiteness are obtained; the amine terminal group content, carboxylic terminal group content, and moisture absorption rate are high; and the melting temperature, crystallization temperature, and glass transition temperature are not found. Also, in Comparative Example 3, using only an aliphatic saturated C6 to C12 diamine, a low amidation rate, intrinsic viscosity, thermal decomposition temperature, glass transition temperature and whiteness are obtained, and the amine terminal group content, carboxylic terminal group content, and moisture absorption rate are high. Also in the Comparative Examples, because the dicarboxylic acid is not used, amidation rate, intrinsic viscosity, thermal decomposition temperature, glass transition temperature, and whiteness are low, and the moisture absorption rate is high.

Many modifications and other embodiments of the invention will come to mind to one skilled in the art to which this invention pertains having the benefit of the teachings presented in the foregoing descriptions. Therefore, it is to be understood that the invention is not to be limited to the specific embodiments disclosed and that modifications and other embodiments are intended to be included within the scope of the appended claims. Although specific terms are employed herein, they are used in a generic and descriptive sense only and not for purposes of limitation, the scope of the invention being defined in the claims.

## Claims

1. A modified polyamide resin comprising in its chain repeating units represented by the following Chemical Formula 1 derived from dicarboxylic acid; and repeating units in its chain derive from an aliphatic saturated diamine as indicated by following Chemical Formula 2, wherein the repeating units in its chain derive from an aliphatic saturated diamine as indicated by following Chemical Formula 2 include repeating units in its chain derived from an aliphatic saturated C2 to C6 diamine as indicated by the following Chemical Formula 2, and repeating units in its chain derived from an aliphatic saturated C6 to C12 diamine which is different from the aliphatic saturated C2 to C6 diamine, as also indicated by the following Chemical Formula 2:

[Chemical Formula 1]

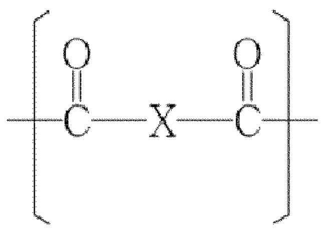

[Chemical Formula 2]

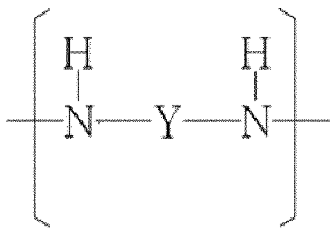

wherein, in the above Chemical Formula 1, X is a part of a repeating unit derived from the dicarboxylic acid and corresponds to an aliphatic saturated hydrocarbon group, an aromatic hydrocarbon group, or a combination thereof of the dicarboxylic acid; and in Chemical Formula 2,Y is a part of a unit derived from the aliphatic saturated C2 to C6 diamine and corresponds to a C2 to C6 aliphatic saturated hydrocarbon group of the aliphatic saturated C2 to C6 diamine or a part of a unit derived from the aliphatic saturated C6 to C12 diamine and corresponds to a C6 to C12 aliphatic saturated hydrocarbon group of the aliphatic saturated C6 to C12 diamine.

2. The modified polyamide resin of Claim 1, comprising 30 to 70 mole% of the repeating units represented by Chemical Formula 1 derived from said dicarboxylic acid and 30 to 70 mole% of the repeating units represented by Chemical Formula 2.

3. The modified polyamide resin of Claims 1 or 2, wherein said repeating units derived from the said aliphatic saturated diamines comprises 5 to 95 mole% of repeating units derived from the aliphatic saturated C2 to C6 diamine and 5 to 95 mole% of repeating units derived from the aliphatic saturated C6 to C12 diamine.

4. The modified polyamide resin of any one of Claims 1 to 3, wherein the repeating units derived from the dicarboxylic acid comprises 1 to 20 mole% of the repeating unit derived from an aliphatic saturated dicarboxylic acid and 80 to 99 mole% of repeating units derived from an aromatic dicarboxylic acid.

5. The modified polyamide resin of any one of Claims 1 to 4, further comprising a repeating unit represented by the following Chemical Formula 3 derived from 0 to 5 mole% of a diol based on 100 mole% of the repeating units derived from said dicarboxylic acid and the repeating units derived from the said aliphatic saturated diamines:

[Chemical Formula 3]

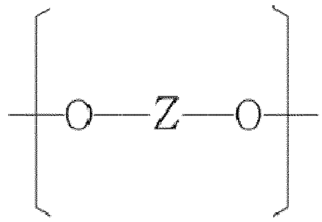

wherein, in the above Chemical Formula, Z is a part of a repeating unit derived from the diol and corresponds to an aliphatic saturated hydrocarbon group, aromatic hydrocarbon group, or a combination thereof of the diol.

6. The modified polyamide resin of any one of Claims 1 to 5, wherein the modified polyamide resin has an intrinsic viscosity of 0.60 to 1.00 dL/g.

7. The modified polyamide resin of any one of Claims 1 to 6, wherein the modified polyamide resin includes amine terminal groups in an amount of 30 to 1,000 μeq/g.

8. The modified polyamide resin of any one of Claims 1 to 7, wherein the modified polyamide resin has a thermal decomposition temperature of 415 to 445 °C, a melting temperature of 310 to 340 °C, a crystallization temperature of 270 to 300 °C, and a glass transition temperature of 140 to 170 °C.

9. The modified polyamide resin of any one of Claims 1 to 8, wherein the modified polyamide resin has a moisture absorption rate of 1.0 to 4.5% after being maintained in a thermo-hygrostatic chamber at a temperature of 80°C and a relative humidity 90% for 48 hours and a L* value of 80 to 100 measured using a color difference meter in accordance with ASTM D1209.

10. A method of making of a modified polyamide resin comprising:

forming a modified polyamide prepolymer by solid phase amidation of a mixture of polyester resin, aliphatic saturated C2 to C6 diamine monomer and aliphatic saturated C6 to C12 diamine monomer which is different from said aliphatic saturated C2 to C6 diamine monomer;
removing a diol component derived from said polyester resin under vacuum conditions; and
adding dicarboxylic acid to the formed modified polyamide prepolymer and conducting solid phase copolymerization to form a modified polyamide polymer.

11. The method of Claim 10, wherein the polyamide prepolymer is formed at a temperature of 120 to 220 °C for 4 to 7 hours, the step of removing the diol is conducted at a temperature of 150 to 200 °C and a pressure of 2 to 10 mbar for 3 to 22 hours, and the step of forming the modified polyamide resin by solid state polymerization is conducted at a temperature of 200 to 300 °C for 6 to 10 hours.

12. The method of Claims 10 or 11, wherein the polyester resin is used in an amount of 100 parts by weight, the aliphatic saturated C2 to C6 diamine monomer is used in an amount of 10 to 60 parts by weight, the aliphatic saturated C6 to C12 diamine monomer is used in an amount of 10 to 60 parts by weight, and the amidation catalyst is used in an amount of 0.01 to 3 parts by weight.

13. The method of any one of Claims 10 to 12, wherein the dicarboxylic acid is used in an amount of 1 to 25 parts by weight based on 100 parts by weight of the modified polyamide prepolymer.

**14.** The method of any one of Claim 10 to 13, wherein the amidation catalyst comprises phosphoric acid, phosphorus acid, hypophosphorus acid, sodium hypophosphate, sodium hypophosphinate, or a combination thereof.

**15.** The method of any one of Claims 10 to 14, wherein the dicarboxylic acid comprises oxalic acid, malonic acid, succinic acid, glutaric acid, adipic acid, pimelic acid, suberic acid, azelaic acid, sebacic acid undecanedioic acid, dodecanedioic acid, or a combination thereof, and the aromatic dicarboxylic acid comprises orthophthalic acid, isophthalic acid, terephthalic acid, or a combination thereof.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- US 6383181 B
- US 5837803 A
- JP 3664577 B
- KR 20020070589